# FASCICULE DE BREVET EUROPEEN

(11) **EP 4 615 707 B1**
(45) Date de publication et mention de la délivrance du brevet: **25.11.2026**
(21) Numéro de dépôt: 23798824.1
(22) Date de dépôt: 04.10.2023
(51) Int. Cl.: B60H 1/00, B60H 3/06

(54) **DISPOSITIF DE COMMANDE D'UN CIRCUIT DE FILTRATION D'AIR EXTÉRIEUR POUR VÉHICULE AUTOMOBILE**
VORRICHTUNG ZUR STEUERUNG EINES EXTERNEN LUFTFILTERKREISLAUFS FÜR EIN KRAFTFAHRZEUG
DEVICE FOR CONTROLLING AN EXTERNAL AIR FILTRATION CIRCUIT FOR A MOTOR VEHICLE

(30) Priorité: 09.11.2022 FR 2211647
(43) Date de publication de la demande: 17.09.2025
(73) Titulaire: Stellantis Auto SAS, 78300 Poissy (FR)
(72) Inventeur: YEFESS, Jonathan, 78330 FONTENAY LE FLEURY (FR); JACQUEMARD, Ivan, 92130 ISSY LES MOULINEAUX (FR); DUMUR, Denis, 78990 ELANCOURT (FR); GUIDEZ, Frederic, 75015 PARIS (FR)
(74) Mandataire: ESIP
(86) Numéro de dépôt international: PCT/FR2023/051533
(87) Numéro de publication internationale: WO 2024/100330

(56) Documents cités:
- EP-A1- 4 173 690
- WO-A1-2018/224299
- DE-A1- 102017 008 745

## Description

La présente invention revendique la priorité de la demande française 2211647 déposée le 09.11.2022**.**

La présente invention a trait aux dispositifs de commande d'un filtre à air à haute efficacité équipant un véhicule automobile.

Les filtres à air à haute efficacité équipant des véhicules automobiles, couramment désigné en anglais par filtre « HEPA » (pour « High Efficiency Particulate Air » ou « filtre à Particules Aériennes à Haute Efficacité ») sont bien connus de l'homme du métier. Pour le confort et la protection des passagers, ces filtres permettent de réduire la concentration en particules fines aéroportés dans l'air extérieur transmis à l'intérieur de l'habitacle du véhicule automobile. Ces particules fines, dont notamment des micro-organismes ou des allergènes, peuvent, en effet, être sources de désagrément, voire dangereux à partir de certaines concentrations. Néanmoins, l'efficacité d'une telle filtration HEPA est au prix d'une forte perte de charge filtrante.

A cet égard, pour éviter une filtration HEPA en continu indépendamment des conditions extérieures, il est connu d'équiper le véhicule automobile d'un capteur de qualité d'air disposé en amont du filtre HEPA et d'un conduit/sous-circuit d'évitement, également qualifié de «bipasse» ou de «by-pass» selon une terminologie anglo-saxonne, permettant de contourner le filtre HEPA lorsqu'une filtration HEPA est jugée non nécessaire. Ainsi, en fonction des données de mesure fournies par le capteur de qualité d'air, un dispositif de commande active la filtration HEPA ou, au contraire, désactive celle-ci et utilise le conduit d'évitement.

Un inconvénient de cette approche de commande est qu'elle est onéreuse et, qu'en outre, elle est tributaire du bon fonctionnement du capteur de qualité d'air. Un dysfonctionnement du capteur de qualité d'air pour diverses raisons (par exemple, un capteur masqué par un obstacle, une panne du capteur, un capteur non calibré, des données de mesure non représentatives) engendre une perte de charge filtrante inutilement ou un désagrément pour les passagers du véhicule automobile. D'autres exemples sont divulgués dans les documents DE102017008745 et WO2018224299.

Un objet de la présente invention est de remédier aux inconvénients précités.

Un autre objet de la présente invention est d'améliorer la commande des filtres à air, notamment de type HEPA, ou, de manière équivalente, des conduits d'évitement.

A cet effet, il est proposé, en premier lieu, un dispositif de commande d'un circuit de filtration d'air extérieur destiné à être transmis à l'intérieur de l'habitacle d'un véhicule automobile, ce circuit de filtration comprenant un filtre à air et un conduit d'évitement contournant ledit filtre à air, le dispositif de commande étant pourvu d'une base de données comprenant des informations indiquant la présence ou l'absence d'allergènes dans l'air extérieur, le dispositif de commande étant configuré pour
- déterminer une période en cours de l'année ;
- interroger, lorsqu'une probabilité prédéfinie de présence d'allergènes dans l'air extérieur associée à la période déterminée est inférieure à une valeur seuil prédéfinie, ladite base de données concernant la présence ou l'absence d'allergènes dans l'air extérieur;
- générer, lorsque lesdites informations indiquent la présence d'allergènes dans l'air extérieur, une première commande pour activer le filtre à air;
- générer, lorsque lesdites informations indiquent l'absence d'allergènes dans l'air extérieur, une deuxième commande pour ouvrir le conduit d'évitement.

Diverses caractéristiques supplémentaires peuvent être prévues, seules ou en combinaison :
- le filtre à air est un filtre à air à haute efficacité ;
- les informations indiquant la présence ou l'absence d'allergènes sont géolocalisées ;
- le dispositif de commande est configuré pour interroger la base de données de façon périodique ;
- le dispositif de commande est configuré pour interroger la base de données à chaque changement de la position de ce dispositif de commande d'une zone géographique prédéfinie à une autre ;
- le dispositif de commande est configuré pure générer, lorsque ladite probabilité prédéfinie est supérieure ou égale à la valeur seuil, une commande pour activer le filtre à air.

Il est proposé, en deuxième lieu, un procédé de commande d'un circuit de filtration d'air extérieur destiné à être transmis à l'intérieur de l'habitacle d'un véhicule automobile, le circuit de filtration comprenant un filtre à air et un conduit d'évitement contournant ledit filtre à air, ce procédé de commande comprenant les étapes suivantes:
- détermination d'une période en cours de l'année;
- interrogation, lorsqu'une probabilité prédéfinie de présence d'allergènes dans l'air extérieur associée à la période déterminée est inférieure à une valeur seuil prédéfinie, d'une base de données comprenant des informations indiquant la présence ou l'absence d'allergènes dans l'air extérieur concernant la présence ou l'absence d'allergènes dans l'air extérieur;
- génération, lorsque lesdites informations indiquent la présence d'allergènes dans l'air extérieur, d'une première commande pour activer le filtre à air;
- génération, lorsque lesdites informations indiquent l'absence d'allergènes dans l'air extérieur, d'une deuxième commande pour ouvrir le conduit d'évitement.

Diverses caractéristiques supplémentaires peuvent être prévues, seules ou en combinaison :
- les informations indiquant la présence ou l'absence d'allergènes sont géolocalisées ;
- l'étape d'interrogation de la base de données est périodique.

Il est proposé, en troisième lieu, un véhicule automobile comprenant
- un circuit de filtration d'air extérieur destiné à être transmis à l'intérieur de l'habitacle de ce véhicule automobile, ce circuit de filtration comprenant un filtre à air et un conduit d'évitement contournant ledit filtre à air ;
- le dispositif de commande présenté ci-dessus.

D'autres caractéristiques et avantages de l'invention apparaîtront plus clairement et de manière concrète à la lecture de la description ci-après de modes de réalisation, laquelle est faite en référence aux dessins annexés dans lesquels :

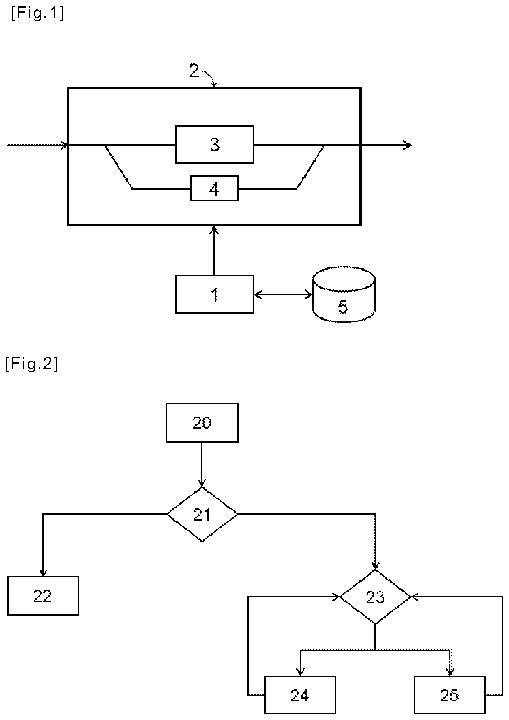

la figure [Fig.1] illustre schématiquement un dispositif de commande d'un circuit de filtration d'air extérieur destiné à être transmis à l'intérieur de l'habitacle d'un véhicule automobile selon divers modes de réalisation;

la figure [Fig.2] illustre schématiquement des étapes d'un procédé de commande d'un circuit de filtration d'air extérieur destiné à être transmis à l'intérieur de l'habitacle d'un véhicule automobile selon divers modes de réalisation.

En se référant à la figure 1, il est affiché un dispositif 1 de commande d'un circuit 2 de filtration d'air extérieur destiné à être transmis à l'intérieur de l'habitacle d'un véhicule automobile.

Le circuit 2 de filtration comprend un filtre à air 3 et un conduit 4 (ou un sous-circuit) d'évitement contournant ce filtre à air 3. Le filtre à air 3 est, de préférence, à haute efficacité, autrement dit un filtre HEPA. Plus généralement, le filtre à air 3 est, dans un mode de réalisation, apte à filtrer, en un passage, au moins 85 % des particules de taille entre 0,1 µm et 0,2 µm. Le conduit 4 d'évitement relie directement l'entrée du filtre à air 3 à sa sortie de sorte à pouvoir le contourner ou le court-circuiter.

Afin d'utiliser le filtre à air 3 de façon pertinente (c.à.d. uniquement aux moments où on en a besoin), le dispositif 1 de commande est configuré pour déterminer (étape **21** sur la figure 2) la période en cours de l'année, notamment la saison en cours. La présence d'allergènes dans l'air extérieur est, en effet, en lien avec la période de l'année. La teneur de l'air extérieur en allergènes dépend, le plus souvent, de la saison en cours. Plus généralement, une probabilité prédéfinie de présence d'allergènes dans l'air extérieur est associée à chaque période de l'année.

La période en cours de l'année est, dans un mode de réalisation, déterminée à partir de la date du jour, du numéro de la semaine, ou du mois courant de l'année. Cette étape **21** de détermination de la saison en cours intervient après une étape **20** d'initialisation du circuit 2 de filtration, par exemple au démarrage du véhicule automobile.

Le dispositif **1** de commande est configuré pour générer (étape **22** sur la figure 2), lorsqu'une probabilité prédéfinie de présence d'allergènes dans l'air extérieur associée à la période en cours de l'année est supérieure ou égale à une valeur seuil prédéfinie, une commande pour activer le filtre à air **3.** Dans ce cas, le conduit **4** d'évitement est, dans un mode de réalisation, fermé. Par conséquent, l'air extérieur n'est pas transmis à l'intérieur de l'habitacle du véhicule automobile via le conduit **4** d'évitement, mais bien via le filtre à air **3.** Par exemple, si lors du démarrage du véhicule automobile, le dispositif **1** de commande détermine que la saison en cours est fortement sujet à la présence d'allergènes (une probabilité de présence d'au moins un allergène est supérieure, par exemple, à 0,5 ; 0,7 ; ou 0,8), le dispositif **1** de commande génère une commande d'activation du filtre à air **3** et ferme le conduit **4** d'évitement de sorte à forcer le passage de l'air extérieur par le filtre HEPA. Lorsque le conduit **4** d'évitement est fermé à cause de la saison en cours considérée comme à risque de présence d'allergènes, il est maintenu en état fermé jusqu'au prochain démarrage du véhicule automobile où le dispositif **1** de commande déterminera à nouveau (étape **21** sur la figure 2) la période en cours de l'année.

Par ailleurs, le dispositif **1** de commande est pourvu d'au moins une base de données **5** comprenant des informations indiquant la présence ou l'absence d'allergènes dans l'air extérieur. Plusieurs bases de données **5** regroupant des données en lien avec les allergènes présents dans l'air extérieur existent dans l'état de la technique, par exemple la base de données du programme européen Copernicus^{®} pour la surveillance de l'atmosphère ou celle du réseau national français de surveillance des allergènes.

La base de données **5** peut être locale (stockée dans le dispositif **1** de commande) ou distante et accessible au dispositif **1** de commande grâce à des moyens de communication sans fil dont est muni le véhicule automobile.

Dans un mode de réalisation, les informations comprises dans la base de données **5** sont mises à jour en temps réel, en quasi temps réel, ou du moins de manière régulière. En variante ou en combinaison, les informations indiquant la présence ou l'absence d'allergènes sont géolocalisées (c.à.d. par endroit). La base de données comprend, de préférence, des informations détaillées relatives à des allergènes, telles que la catégorie, la date d'apparition, la localisation, le taux de présence, des taux/teneurs antérieurs et/ou prévisionnels.

Lorsque la probabilité prédéfinie de présence d'allergènes dans l'air extérieur associée à la période en cours de l'année est inférieure à ladite valeur seuil, le dispositif **1** de commande est configuré pour interroger (ou consulter) (étape **23** sur la figure 2) la base de données **5** concernant la présence ou l'absence d'allergènes dans l'air extérieur. Autrement dit, si le dispositif **1** de commande détermine qu'on n'est pas dans une période de l'année assujettie aux allergènes, il lance une consultation auprès de la base de données **5.**

Le dispositif **1** de commande est configuré pour générer (étape **24** de la figure 2), lorsque les informations de la base de données **5** indiquent la présence d'allergènes dans l'air extérieur, une commande pour activer le filtre à air **3.** S'il s'avère, selon les informations fournies par la base de données **5,** la présence d'allergènes à la position du véhicule automobile, alors le dispositif **1** de commande ordonne l'utilisation du filtre à air **3** ou, autrement dit, la fermeture du conduit **4** d'évitement pour mettre en usage la filtration HEPA de l'air provenant de l'extérieur. La requête soumise par le dispositif **1** de commande comprend, dans un mode de réalisation, des données de position du véhicule automobile.

En revanche, lorsque les informations de la base de données **5** indiquent l'absence d'allergènes dans l'air extérieur, le dispositif **1** de commande génère (étape **25** sur la figure 2) une commande pour ouvrir le conduit **4** d'évitement, laissant alors passer l'air extérieur par ce conduit **4** d'évitement sans impliquer la filtration HEPA dans le circuit **2** de filtration. Dans ce cas, le filtre à air **3** peut être désactivé.

Tel qu'il est illustré par la figure 2, le dispositif **1** de commande est, dans un mode de réalisation, configuré pour interroger de façon périodique la base de données **5** (par exemple, une heure avant le démarrage (pré-conditionnement) et toutes les heures après le démarrage du véhicule automobile) concernant la présence ou l'absence d'allergènes dans l'air extérieur. En variante ou en combinaison, le dispositif **1** de commande est configuré pour interroger la base de données **5** concernant la présence ou l'absence d'allergènes dans l'air extérieur à un intervalle régulier de distance parcourue (par exemple, tous les 20, 30 ou 50 km parcourus) ou à chaque changement de la position de ce dispositif **1** de commande d'une zone géographique prédéfinie à une autre (par exemple, via un géorepérage ou un gardiennage virtuel dit, en anglais, « geofencing »). Les informations indiquant la présence ou l'absence d'allergènes mises à disposition par la base de données peuvent, en effet, être dépendantes de la position du véhicule automobile.

Avantageusement, les modes de réalisation décrits ci-dessus permettent de piloter l'état du conduit **4** d'évitement entre un état fermé et un état ouvert en fonction de la saison actuelle (période en cours de l'année) et des informations indiquant la présence ou l'absence d'allergènes mises à disposition par la base de données **5.** Il en résulte une utilisation optimale du filtre à air **3** à haute efficacité et, par conséquent, une économie de charge pour le véhicule automobile, tout en protégeant les passagers contre les allergènes.

## Revendications

1. Dispositif (**1**) de commande d'un circuit (**2**) de filtration d'air extérieur destiné à être transmis à l'intérieur de l'habitacle d'un véhicule automobile, ce circuit (**2**) de filtration comprenant un filtre à air (**3**) et un conduit (**4**) d'évitement contournant ledit filtre à air (**3**), le dispositif (**1**) de commande est pourvu d'une base de données (**5**) comprenant des informations indiquant la présence ou l'absence d'allergènes dans l'air extérieur, le dispositif (**1**) de commande étant **caractérisé en ce qu'**il est configuré pour
- déterminer une période en cours de l'année ;
- interroger, lorsqu'une probabilité prédéfinie de présence d'allergènes dans l'air extérieur associée à la période déterminée est inférieure à une valeur seuil prédéfinie, ladite base de données (**5**) concernant la présence ou l'absence d'allergènes dans l'air extérieur;
- générer, lorsque lesdites informations indiquent la présence d'allergènes dans l'air extérieur, une première commande pour activer le filtre à air (**3**);
- générer, lorsque lesdites informations indiquent l'absence d'allergènes dans l'air extérieur, une deuxième commande pour ouvrir le conduit (**4**) d'évitement.

2. Dispositif de commande selon la revendication précédente, **caractérisé en ce que** ledit filtre à air (**3**) est un filtre à air à haute efficacité.

3. Dispositif de commande selon la revendication 1 ou 2, **caractérisé en ce que** les informations indiquant la présence ou l'absence d'allergènes sont géolocalisées.

4. Dispositif de commande selon l'une quelconque des revendications précédentes, **caractérisé en ce qu'**il est configuré pour interroger la base de données (**5**) de façon périodique.

5. Dispositif de commande selon l'une quelconque des revendications précédentes, **caractérisé en ce qu'**il est configuré pour interroger la base de données (**5**) à chaque changement de la position de ce dispositif (**1**) de commande d'une zone géographique prédéfinie à une autre.

6. Dispositif de commande selon l'une quelconque des revendications précédentes, **caractérisé en ce qu'**il est configuré pour générer, lorsque ladite probabilité prédéfinie est supérieure ou égale à la valeur seuil, une commande pour activer le filtre à air (**3**).

7. Procédé de commande d'un circuit (**2**) de filtration d'air extérieur destiné à être transmis à l'intérieur de l'habitacle d'un véhicule automobile, le circuit (**2**) de filtration comprenant un filtre à air (**3**) et un conduit (**4**) d'évitement contournant ledit filtre à air (**3**), ce procédé de commande étant **caractérisé en ce qu'**il comprend les étapes suivantes:
- détermination (**21**) d'une période en cours de l'année;
- interrogation (**23**), lorsqu'une probabilité prédéfinie de présence d'allergènes dans l'air extérieur associée à la période déterminée est inférieure à une valeur seuil prédéfinie, d'une base de données (**5**) comprenant des informations indiquant la présence ou l'absence d'allergènes dans l'air extérieur concernant la présence ou l'absence d'allergènes dans l'air extérieur;
- génération (**24**), lorsque lesdites informations indiquent la présence d'allergènes dans l'air extérieur, d'une première commande pour activer le filtre à air (**3**);
- génération (**25**), lorsque lesdites informations indiquent l'absence d'allergènes dans l'air extérieur, d'une deuxième commande pour ouvrir le conduit (**4**) d'évitement.

8. Procédé de commande selon la revendication précédente, **caractérisé en ce que** les informations indiquant la présence ou l'absence d'allergènes sont géolocalisées.

9. Procédé de commande selon la revendication 7 ou 8, **caractérisé en ce que** l'étape d'interrogation (**23**) de la base de données (**5**) est périodique.

10. Véhicule automobile comprenant
- un circuit (**2**) de filtration d'air extérieur destiné à être transmis à l'intérieur de l'habitacle de ce véhicule automobile, ce circuit (**2**) de filtration comprenant un filtre à air (**3**) et un conduit (**4**) d'évitement contournant ledit filtre à air (**3**),
- le dispositif (**1**) de commande de l'une quelconque des revendications 1 à 6.

## Patentansprüche

1. Vorrichtung (1) zur Steuerung eines externen Luftfilterkreises (2) zur Übertragung in den Innenraum eines Kraftfahrzeugs, wobei der Filterkreis (2) einen Luftfilter (3) und eine den Luftfilter (3) umgehende Umgehungsleitung (4) umfasst, wobei die Steuervorrichtung (1) mit einer Datenbank (5) Informationen umfasst, die das Vorhandensein oder Fehlen von Allergenen in der Außenluft anzeigen, wobei die Steuervorrichtung (1) **dadurch gekennzeichnet ist, dass** sie für
- konfiguriert ist Bestimmung einer Periode während des Jahres;
- Abfrage, wenn eine vorgegebene Wahrscheinlichkeit des Vorhandenseins von Allergenen in der Außenluft, die mit der bestimmten Periode verbunden ist, kleiner als ein vorgegebener Schwellenwert ist, der Datenbank (5) bezüglich des Vorhandenseins oder Nichtvorhandenseins von Allergenen in der Außenluft;
- Generierung, wenn die Informationen das Vorhandensein von Allergenen in der Außenluft anzeigen, einer ersten Steuerung zum Aktivieren des Luftfilters (3);
- Generierung, wenn die Informationen das Nichtvorhandensein von Allergenen in der Außenluft anzeigen, einer zweiten Steuerung zum Öffnen der Ausweichleitung (4).

2. Steuervorrichtung nach dem vorhergehenden Anspruch, **dadurch gekennzeichnet, dass** das Luftfilter (**3**) ein hochwirksames Luftfilter ist.

3. Steuervorrichtung nach Anspruch 1 oder 2, **dadurch gekennzeichnet, dass** die Informationen, die das Vorhandensein oder Fehlen von Allergenen anzeigen, geolokalisiert sind.

4. Steuervorrichtung nach einem der vorhergehenden Ansprüche, **dadurch gekennzeichnet, dass** sie so konfiguriert ist, dass sie die Datenbank (**5**) periodisch abfragt.

5. Steuervorrichtung nach einem der vorhergehenden Ansprüche, **dadurch gekennzeichnet, dass** sie konfiguriert ist, um die Datenbank (**5**) bei jeder Änderung der Position dieser Steuervorrichtung (**1**) von einem vorgegebenen geographischen Gebiet in ein anderes abzufragen.

6. Steuervorrichtung nach einem der vorhergehenden Ansprüche, **dadurch gekennzeichnet, dass** sie so konfiguriert ist, dass sie, wenn die vorgegebene Wahrscheinlichkeit größer oder gleich dem Schwellenwert ist, eine Steuerung zum Aktivieren des Luftfilters (**3**) erzeugt.

7. Verfahren zur Steuerung eines Außenluftfilterkreislaufs (2) zur Übertragung in den Innenraum eines Kraftfahrzeugs, wobei der Filterkreis (2) einen Luftfilter (3) und eine den Luftfilter (3) umgehende Ausweichleitung (4) umfasst, **dadurch gekennzeichnet, dass** das Steuerverfahren die folgenden Schritte umfasst:
- Bestimmung (**21)** einer Periode während des Jahres;
- Abfrage (**23**), wenn eine vorgegebene Wahrscheinlichkeit des Vorhandenseins von Allergenen in der Außenluft vorliegt einer Datenbank (5) mit Informationen, die das Vorhandensein oder Nichtvorhandensein von Allergenen in der Außenluft bezüglich des Vorhandenseins oder Nichtvorhandenseins von Allergenen in der Außenluft anzeigen;
- Erzeugung (24), wenn die Informationen das Vorhandensein von Allergenen in der Außenluft anzeigen, einer ersten Steuerung zum Aktivieren des Luftfilters (3);
- Erzeugung (25), wenn die Informationen das Nichtvorhandensein von Allergenen in der Außenluft anzeigen, einer zweiten Steuerung zum Öffnen der Ausweichleitung (4).

8. Steuerverfahren nach dem vorhergehenden Anspruch, **dadurch gekennzeichnet, dass** die Informationen, die das Vorhandensein oder Fehlen von Allergenen anzeigen, geolokalisiert sind.

9. Steuerverfahren nach Anspruch 7 oder 8, **dadurch gekennzeichnet, dass** der Schritt des Abfragens (**23**) der Datenbank (**5**) periodisch ist.

10. Kraftfahrzeug mit
- einem äußeren Luftfilterkreislauf (2) zur Übertragung von Luft in den Innenraum des Kraftfahrzeugs, wobei der Filterkreislauf (2) einen Luftfilter (3) und eine den Luftfilter (**3**) umgehende Umgehungsleitung (**4**) umfasst,
- der Steuervorrichtung (**1**) nach einem der Ansprüche 1 bis 6.

## Claims

1. Order device (1) of an outdoor air filtration circuit (2) intended to be transmitted inside the passenger compartment of a motor vehicle, this filtration circuit (2) comprising an air filter (3) and an avoidance conduit (4) bypassing said air filter (3), the order device (1) provided with a data activate (5) comprising information indicating the presence or absence of allergens in the outdoor air, the order device (1) being **characterised in that** it is configured for
- determining an in progress period of the year;
- querying, when a predefined probability of the presence of allergens in the outdoor air associated with the determined period is less than a predefined threshold value, said data base (5) or the absence of allergens in the outside air;
- generating, when said information indicates the presence of allergens in the outside air, a first order for ordering the air filter (3);
- generating, when said information indicates the absence of allergens in the outside air, a second for opening the avoidance conduit (4).

2. Order device according to claim 1, **wherein** said air previous (**3** is a high efficiency air filter.

3. Order device according to claim 1 or 2, **wherein** the information indicating the presence or absence of allergens is geolocated.

4. Order device according to claim 1, **wherein** it is configured to query the previous (**5**) in a manner {circumflex over (X)}.

5. Order device according to claim 1, **wherein** it is configured to query the position (**5**) at each change of the order device (**1**) from one predefined geographical area to another.

6. Order device according to claim 1, **wherein** it is configured to generate, when said predefined probability is greater than or equal to the threshold value, a order for activating the air previous (**3**).

7. Method for ordering an outdoor air filtration circuit **(2)** intended to be transmitted inside the passenger compartment of a motor vehicle, the filtration circuit **(2)** comprising an air filter **(3)** and an avoidance conduit **(4)** bypassing said air filter **(3)**, this order method being **characterised in that** it comprises the steps of:
- determination (**21)** of an in progress period of the year;
- interrogation (**23**), when a predefined probability of presence of allergens in the outdoor air associated with the determined period is less than a predefined threshold value, of a database **(5)** comprising information indicating the presence or absence of allergens in the outdoor air outside;
- generation (24), when said information indicates the presence of allergens in the outside air, of a first order for activating the air filter (3);
- generation (25), when said information indicates the absence of allergens in the outside air, of a second order for opening the avoidance conduit (4).

8. Order method according to claim 1, **wherein** the information indicating the presence or absence of allergens is geolocated.

9. Order method according to claim 7 or 8, **wherein** the interrogation step (**23** of the database (**5**) is periodical.

10. Motor vehicle comprising
- a circuit (2) for filtering outside air intended to be transmitted inside the passenger compartment of this motor vehicle, this filtration circuit (2) comprising an air filter (3) and an avoidance conduit (**4**) bypassing said air filter (**3**),
- the **order** device (**1**) of any one of claims 1 to 6.
